**Europäisches Patentamt**

**European Patent Office**

**Office européen des brevets**

(19)

(11) Veröffentlichungsnummer: **0 099 980**
**B1**

(12) # EUROPÄISCHE PATENTSCHRIFT

(45) Veröffentlichungstag der Patentschrift:
**19.02.86**

(21) Anmeldenummer: **83105696.5**

(22) Anmeldetag: **10.06.83**

(51) Int. Cl.⁴: **A 24 B  3/08,** A 24 B  3/00,
A 24 B  13/00

(54) **Vorrichtung zur Bildung von Tabak-Portionen.**

(30) Priorität: **16.07.82  DE 3226654**

(43) Veröffentlichungstag der Anmeldung:
**08.02.84 Patentblatt 84/6**

(45) Bekanntmachung des Hinweises auf die Patenterteilung:
**19.02.86 Patentblatt 86/8**

(84) Benannte Vertragsstaaten:
**CH DE FR GB LI NL**

(56) Entgegenhaltungen:
**DE - A - 2 338 374**
**DE - A - 2 405 947**

(73) Patentinhaber: **FOCKE & CO., Siemensstrasse 10,
D-2810 Verden (DE)**

(72) Erfinder: **Focke, Heinz, Moorstrasse 64, D-2810 Verden
(DE)**
Erfinder: **Balmer, Oskar, Preussisch-Eylau-Strasse 11,
D-2810 Verden (DE)**

(74) Vertreter: **Bolte, Erich, Dipl.-Ing., c/o Meissner & Bolte
Patentanwälte Hollerallee 73, D-2800 Bremen (DE)**

## Beschreibung

Die Erfindung betrifft eine Vorrichtung zur Bildung von Portionen aus faserigem Gut, insbesondere Schnittabak, durch Abtrennen einer vorzugsweise unterbemessenen Grobportion von einem Strang des faserigen Gutes und Zugabe einer durch Wägen der Grobportion bestimmten Ausgleichsportion, wobei mehrere, insbesondere zwei, Waagen alternativ mit einzelnen Grobportionen beschickbar und die kompletten Portionen abförderbar sind. Weiterhin betrifft die Erfindung ein Verfahren, welches im Zusammenhang mit der erfindungsgemässen Vorrichtung für die Bildung der Tabak-Portionen zur Anwendung kommt.

Für die Verpackung von Portionen aus Schnitttabak ist eine möglichst exakte Dosierung erforderlich. Aufgrund der gesetzlichen Bestimmungen sind untergewichtige Portionen grundsätzlich unzulässig. Eine etwaige Überdosierung ist nach Möglichkeit ebenfalls zu vermeiden.

Bei einer bekannten Vorrichtung zum Dosieren von Schnittabak (DE-A Nr. 2338374) wird aus dem mehr oder weniger ungeordneten Vorrat an Schnittabak zunächst ein fortlaufender, in Abwärtsrichtung geförderter Strang aus gepresstem Tabak gebildet. Von diesem Strang werden durch eine geeignete Trennvorrichtung die einzelnen Grobportionen abgetrennt und alternativ der einen oder anderen Waage zugeführt. Diese stellen die jeweils vorhandene Differenz der Grobportion gegenüber der (Soll-)portion fest. Durch eine besondere Feindosiereinrichtung wird entsprechend der Fehlmenge Feintabak zugeführt, bis die Sollportion erreicht ist. Diese wird dann über einen Trichter auf einen Abförderer gegeben.

Die Leitung und Weitergabe der Grob- sowie Sollportionen im Bereich der Waagen erfolgt bei dieser bekannten Vorrichtung durch schwenkbare Klappen, die je nach der Relativstellung die Portion in die eine oder andere Richtung lenken. Die Portionen gleiten dabei unter ihrem Eigengewicht auf den Klappen jeweils in Abwärtsrichtung. Die Einsatz dieser Klappen hat sich in der Praxis aufgrund des mit den Schwenkbewegungen verbundenen Zeitaufwands als ungünstig erwiesen.

Ausgehend von dem geschilderten Stand der Technik liegt der Erfindung die Aufgabe zugrunde, eine Vorrichtung zum Portionieren und Dosieren von insbesondere Schnittabak vorzuschlagen, bei der äusserst präzise (Soll-)portionen bei hoher Leistungsfähigkeit gebildet und weitergegeben werden können.

Zur Lösung dieser Aufgabe ist die erfindungsgemässe Vorrichtung dadurch gekennzeichnet, dass die vom Strang abgetrennten Grobportionen je in einer Tasche eines drehbaren Zwischenförderers Aufnahme finden und durch Teildrehung desselben der einen oder anderen Waage zuführbar sind.

Durch diesen als Zellenrad mit in Radialrichtung nach aussen offenen Taschen ausgebildeten Zwischenförderer ist eine leistungsfähige Weitergabe der abgetrennten Grobportionen an die eine oder andere Waage möglich, wobei die Tabakportionen schonend behandelt werden. Das Zellenrad führt dabei jeweils nur Drehungen längs eines Teilkreises aus, um eine Grobportion weiterzufördern und zugleich eine freie Tasche in die Position zur Aufnahme der nachfolgenden Grobportion zu bewegen. Vorzugsweise ist das Zellenrad mit drei jeweils einen Umfangsbereich von etwa 120° in Anspruch nehmenden Taschen ausgebildet, so dass eine Drehung des Zellenrades um 120° ausreicht, um eine nach oben offene Tasche in die Aufnahmeposition für eine Grobportion und die beiden anderen Taschen in eine schräg nach unten bzw. zur Seite gerichtete Endladestellung zu bringen. Die Waagen bzw. Aufnahmeorgane derselben sind entsprechend seitlich versetzt und unterhalb des Zwischenförderers angeordnet, so dass die Portionen ausschliesslich durch die Drehbewegung des Zellenrades weitergegeben werden.

Unterhalb und mit seitlichem Versatz zu dem als Zellenrad ausgebildeten Zwischenförderer sind nach einem weiteren Vorschlag der Erfindung je ein weiteres Zellenrad angeordnet, welches als Waageaufnahme die von dem Zwischenförderer zugeführte Grobportion aufnimmt und das tatsächlich vorhandene Gewicht derselben feststellt. Diese als Waageaufnahme dienenden Zellenräder sind je mit einer Präzisionswaage unmittelbar verbunden, und zwar über einen Waagearm, der seinerseits an einen Waagebalken der Präzisionswaage angeschlossen ist. Nach Aufnahme der Grobportion durch die Waageaufnahme erfolgt demnach umgehend die Feststellung des Gewichts. Des weiteren wird unmittelbar eine Differenzportion der Grobportion zugeführt, bis die Tabakportion das Sollgewicht (Sollportion) erreicht hat. Diese wird sodann durch die als Förderer (Zellenrad) ausgebildete Waageaufnahme weitergeleitet an einen Abförderer.

Die die Waageaufnahmen bildenden Zellenräder sind in gleicher bzw. ähnlicher Weise ausgebildet wie das als Zwischenförderer eingesetzte Zellenrad. Aus den geometrischen Beziehungen ergeben sich die Relativstellungen der drei Zellenräder zueinander, derart, dass jeweils eine nach oben gerichtete Tasche zur Aufnahme einer Tabakportion und die nach unten gerichteten Taschen zur Abförderung einer Tabakportion dienen.

Die Präzisionswaage ist jeweils mit einer Feindosiereinrichtung verbunden, die vorzugsweise der Feindosiereinrichtung gemäss DE-A Nr. 2338374 entspricht. Diese (bekannte) Feindosiereinrichtung ist mit einer Anzahl von Stachelwalzen ausgestattet, die eine genau dosierbare Differenzportion der Grobportion im Bereich der Waageaufnahme zuführt.

Arbeitsweise und Steuerung dieser Feindosiereinrichtung sind so ausgelegt, dass auch etwaige Fehlleistungen bei der Herstellung der Grobportion in angemessener Weise berücksichtigt werden. Aus Gründen einer maximalen und kontinuierlichen Leistung ist die Feindosiereinrichtung darauf eingestellt, dass die Differenzportion innerhalb eines kurzen, vorgegebenen Arbeitstaktes der Grobportion zugeführt werden muss. Wenn letztere ein Gewicht unterhalb der vorgegebenen Marge aufweist, kann die Differenzportion während des Arbeitstaktes nicht zugeführt werden. In diesem Fall wird die Zuführung der Differenzportion durch die Feindosiereinrichtung so lange fortgesetzt, bis die Sollportion erreicht ist. Die betreffende Waageaufnahme wird bei Beendigung eines Arbeitstaktes nicht weitergeschaltet, sondern erst beim nächst fälligen Schalttakt für die betreffende Waageaufnahme.

Liegt hingegen die der Präzisionswaage zugeführte Grobportion in ihrem Gewicht deutlich unterhalb des Sollgewichtes oder über demselben, wird diese Grobportion als Fehlportion behandelt und durch entsprechende Betätigung der Waageaufnahme separat abgefördert.

Weitere Merkmale der Erfindung beziehen sich auf die konstruktive Gestaltung der Zellenräder sowie eines im wesentlichen vertikal angeordneten Förderschachtes für den Tabak vor Bildung der Grobportion.

Ein Ausführungsbeispiel der erfindungsgemässen Vorrichtung wird nachfolgend anhand der Zeichnungen näher erläutert.

Es zeigen:

Fig. 1 die Vorrichtung in Seitenansicht bzw. im Vertikalschnitt,

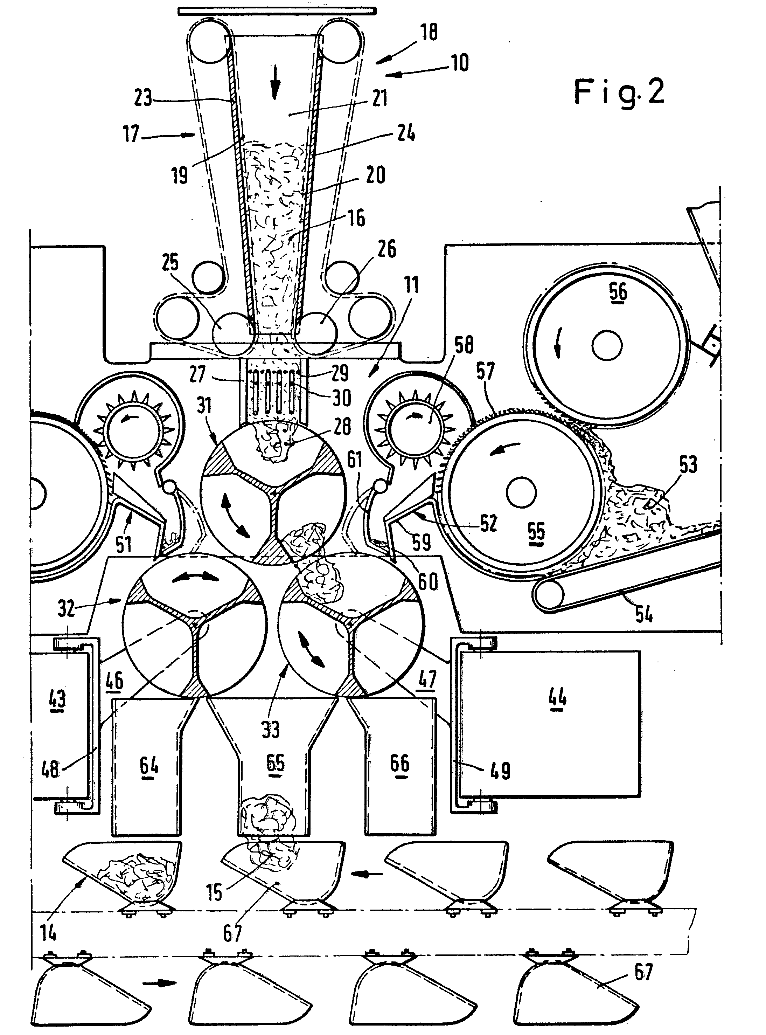

Fig. 2 einen Ausschnitt der Vorrichtung in einer Darstellung entsprechend Fig. 1, bei vergrössertem Massstab,

Fig. 3 ein nochmals vergrösserter Ausschnitt mit erfindungswesentlichen Einzelheiten der Vorrichtung in einer Darstellung entsprechend Fig. 1 und 2,

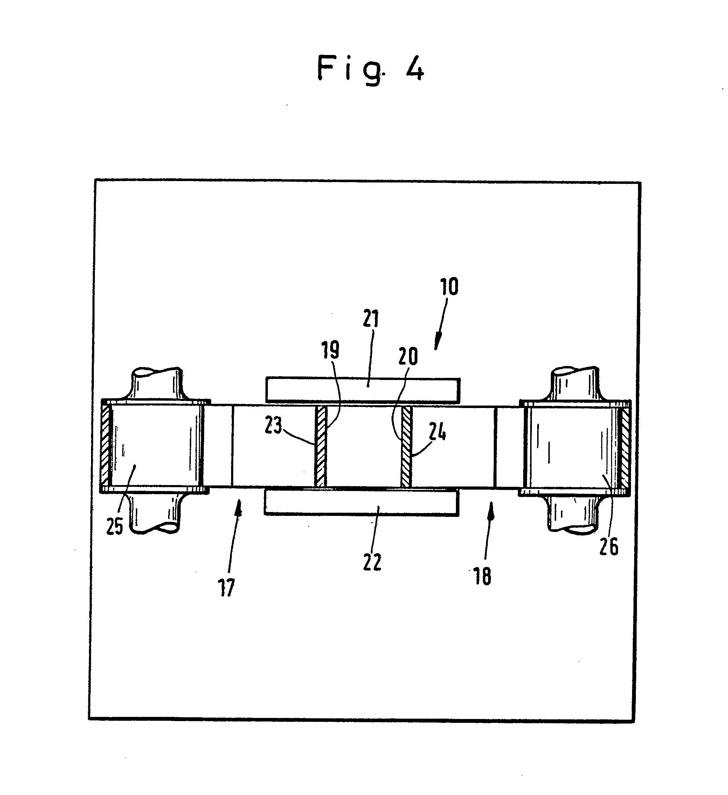

Fig. 4 einen Horizontalschnitt durch einen vertikalen Förderschacht der Vorrichtung.

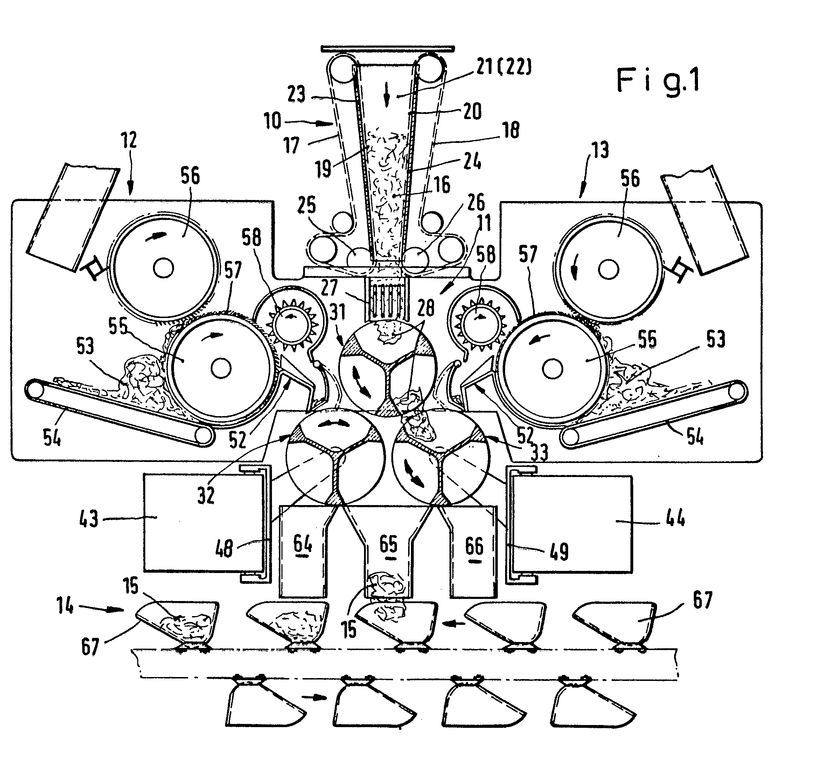

Die in Fig. 1 in ihrer Gesamtheit dargestellte Vorrichtung entspricht im Grundaufbau und im wesentlichen Funktionsablauf der Vorrichtung gemäss DE-A Nr. 2338374. Die Hauptaggregate dieser Vorrichtung sind ein aufrechter Förderschacht 10, eine Portionenverteilungseinrichtung 11, (zwei) Feindosiereinrichtungen 12 und 13 und ein Abförderer 14 für ordnungsgemäss dosierte Tabakportionen (Sollportionen 15).

Der geschnittene Tabak wird nach entsprechender Aufbereitung durch geeignete Förderorgane (DE-A Nr. 2338374) de Förderschacht 10 zugeführt. Innerhalb desselben bildet sich ein in Förderrictung, also nach unten, verdichteter Tabakstrang 16. Der Förderschacht 10 ist zu diesem Zweck in Förderrichtung mit abnehmendem Querschnitt ausgebildet. Diese Querschnittsverminderung wiederum ergibt sich durch einander gegenüberliegende Förderbänder 17 und 18, deren Fördertrum 19 bzw. 20 in Abwärttrichtung konvergierend zueinander geführt sind. Die Fördertrums 19 und 20 begrenzen an einander gegenüberliegenden Seiten den Förderschacht 10. Die beiden hierzu versetzten Seiten des Förderschachts 10 werden durch aufrechte, feststehende Schachtwände 21 und 22 gebildet. Die Fördertrums 19 und 20 laufen zwischen den Schachtwänden 21 und 22, so dass ein im Querschnitt geschlossener, in Förderrichtung in der Breite abnehmender Förderschacht 10 gebildet ist. Die Fördertrums 19 und 20 werden durch feststehende und nach unten konvergierende Stützwände 23 und 24 in ihrer Position gehalten, derart, dass ein gewisser Press druck durch den Fördertrum 19, 20 auf den Tabakstrang 16 ausgeübt wird.

Die Förderbänder 17,18 werden am unteren Austrittsende des Förderschachtes 10 über versetzt zueinander angeordnete Umlenkwalzen 25, 26 geleitet, so dass der Tabakstrang 16 frei aus dem Förderschacht 10 austreten kann.

An den Förderschacht 10 schliesst unten ein feststehender Trennschacht 27 an. Innerhalb desselben erfolgt die Abtrennung einer Grobportion 28 Tabak vom nachfolgenden Tabakstrang 16. Diese Abteilung wird hier mit kammartigen Trennwerkzeugen 29 und 30 durchgeführt, und zwar durch Relativbewegung derselben zueinander, vorzugsweise entsprechend der Ausführung laut DE-A Nr. 2338374. Die Grobportion 28 ist so bemessen, dass sie in der Regel geringfügig unterhalb des Gewichts der Sollportion 15 liegt. Wenn letztere 50 g beträgt, wird die Grobportion 28 beispielsweise im Bereich zwischen 47 g und 49 g dosiert.

Die vorgenannte Grobportion 28 wird von einem Zwischenförderer 31 aufgenommen und von diesem weitergegeben an alternativ eine von zwei Waageaufnahmen 32 und 33 zur Überprüfung des vorhandenen Gewichts. Nach Ergänzung der Grobportion 28 auf das Sollgewicht wird die nun gebildete Sollportion 15 von der Waageaufnahme 32 bzw. 33 an den Abförderer 14 übergeben.

Der Zwischenförderer 31 ist als Zellenrad ausgebildet mit drei um jeweils etwa 120° gegeneinander versetzten Taschen 34, 35 und 36. Diese sind auf der in Radialrichtung aussenliegenden Seite offen. Die Taschen 34, 35, 36 werden dadurch jeweils in einer nach oben gerichteten Position (Tasche 34) befüllt und in den beiden schräg nach unten bzw. zur Seite gerichteten Alternativstellungen durch das Eigengewicht der Tabakportion (Grobportion 28) entleert. Die Taschen 34, 35, 36 sind durch mit einem Winkel von 120° gegeneinander versetzten, radial gerichteten Trennwänden 37, 38, 39 voneinander abgeteilt. Diese laufen im Mittelpunkt bzw. in der Drehachse des Zellenrades zusammen an den in Radialrichtung aussenliegenden Enden bilden die Trennwände 37, 38, 39 im Querschnitt annähernd drei eckförmige Verdickungen 40. Diese bilden trichterförmig gestaltete Leitflächen 41 für die Taschen 34, 35, 36, derart, dass die Tabakportionen vor allem beim Verlassen einer Tasche 34, 35, 36 eine bestimmte Bewegungsrichtung erhalten. Der radial innenliegende Boden der Taschen 34, 35, 36 ist mit einer Abrundung 42 ausgebildet.

Die in vorstehender Weise ausgebildeten, sternförmig angeordneten Trennwände 37, 38, 39 finden Aufnahme zwischen seitlichen, im vorliegenden Falle kreisförmigen Seitenscheiben 50. Diese bilden zugleich die seitlichen Begrenzungen der Taschen 34, 35, 36. Des weiteren dienen die Seitenscheiben zur Anbringung von Drehachsen und von Antrieben für die Drehbewegungen der Zellenräder.

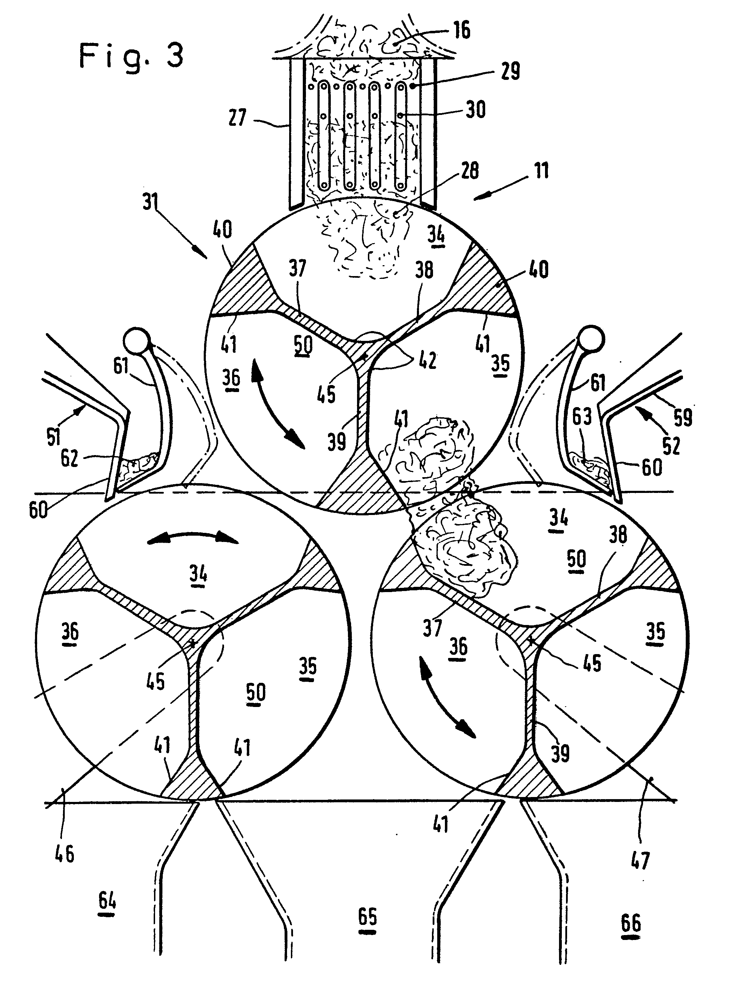

Das so ausgebildete Zellenrad als Zwischenförderer 31 ist jeweils um 120° in der einen oder anderen Richtung drehbar. Während des Stillstands ist jeweils eine Tasche (Tasche 34 in Fig. 3) nach oben gerichtet zur Aufnahme einer Grobportion 28, während die weiteren Taschen 35 und 36 schräg nach unten und zur Seite weisen. Diese letztgenannten Taschen werden in dieser Position entleert.

Die Waageaufnahmen 32 und 33 sind bei dem vorliegenden Ausführungsbeispiel ebenfalls als Zellenräder ausgebildet, und zwar mit den gleichen Konstruktionsmerkmalen wie der Zwischenförderer 31. Die beiden als Zellenräder ausgebildeten Waageaufnahmen 32, 33 sind seitlich versetzt unterhalb des Zwischenförderers 31 angeordnet, derart, dass eine aus den nach unten weisenden Taschen 35 und 36 herausgleitende Grobportion 28 in eine obere Tasche 34 einer der Waageaufnahmen 32, 33 gelangt. Auch bei diesen Zellenrädern werden die Tabakportionen, nämlich Sollportionen 15 oder etwaige Fehlportionen, aus einer der nach unten bzw. zur Seite gerichteten Taschen 35, 36 entleert. Die als Zellenräder ausgebildeten Waageaufnahmen 32, 33 sind in unmittelbarer Nachbarschaft zu dem ebenfalls als Zellenrad ausgebildeten Zwischenförderer 31 angeordnet.

Die Waageaufnahmen 32 und 33 sind zur Feststellung des tatsächlichen Gewichts je mit einer Präzisionswaage 43, 44 gekoppelt. Zu diesem Zweck sind die die Waageaufnahmen 32, 33 bildenden Zellenräder im Bereich ihrer Drehachsen 45 drehbar mit einem Tragarm 46 bzw. 47 verbunden, der seinerseits an einen Waagebalken 48, 49 der zugeordneten Präzisionswaage 43, 44 anschliesst. Die in eine nach oben weisende Tasche 34 der Waageaufnahme 32, 33 eingeführte Grobportion 28 wird dadurch unmittelbar gewogen.

Durch die Relativstellungen der Waageaufnahmen 32, 33 kann in die jeweils nach oben weisende Tasche 34 gleichzeitig mit der Grobportion 28 bzw. unabhängig hiervon eine Differenzportion zugeführt werden, bis die Sollportion 15 präzise erreicht ist. Zu diesem Zweck ist oberhalb und seitlich versetzt zu der Waageaufnahme 32, 33 die Feindosiereinrichtung 12 bzw. 13 angeordnet, die je mit einem Übergabeschacht 51, 52 im Bereich oberhalb der nach oben gerichteten Tasche 34 der Waageaufnahme 32, 33 mündet. Die in Abhängigkeit von dem Gewicht der Grobportion 28 ermittelte Differenzportion wird demnach mit in die jeweils nach oben gerichtete Tasche 34 gefördert. Durch die Gestaltung bzw. die Abmessungen der Taschen 34, 35, 36 ergeben sich keine räumlichen Engpässe.

Die Feindosiereinrichtungen 12, 13 sind bei dem vorliegenden Ausführungsbeispiel im wesentlichen so ausgebildet wie bei der Vorrichtung gemäss DE-A Nr. 2338374. Feintabak 53 wird demnach über einschräg nach unten gerichtetes Band 54 zugefördert und von einer ersten Stachelwalze 55 übernommen. Diese arbeitet zusammen mit einer zweiten Stachelwalze 56 zur Bildung einer möglichst gleichmässigen Tabaklage 57 auf der ersten Stachelwalze 55. Durch ein nachfolgendes Stachelrad 58 wird die Tabaklage 57 von der Stachelwalze 56 abgehoben und auf eine schräg nach unten bzw. zur Waageaufnahme 32, 33 gerichtete Rutsche 59 gefördert. Diese wiederum ist mit einem nach unten weisenden, abgewinkelten Schenkel 60 als weiteres Führungsorgan versehen. Beginn und Ende des Feindosiervorgangs werden durch einen Verschlussklappe 61 bestimmt, die bei Unterbrechung des Feindosiervorgangs an dem Schenkel 60 anliegt (ausgezogene Linien).

Die Grösse der der Waageaufnahme 32, 33 zugeführten Differenzportion bemisst sich einerseits nach der Öffnungsdauer der Verschlussklappe 61 und andererseits nach der ein- und abschaltbaren Dauer der Arbeitsweise der Stachelwalzen 55, 56, 58.

Im einzelnen wird so vorgegangen, dass die Waageaufnahmen 32, 33 auf einen bestimmten Schalttakt ausgerichtet sind. Gleichzeitig mit der Zuführung der Grobportion 28 in die Tasche 34 einer Waageaufnahme 32, 33 wird eine ggf. von dem vorhergehenden Dosiertakt vorhandene Restportion 62, 63 in dieselbe Tasche 34 eingegeben. Wenn aufgrund derselben das Sollgewicht (Sollportion 15) erreicht ist, tritt die Feindosiereinrichtung 12, 13 im übrigen nicht in Aktion. Die betreffende Waageaufnahme 32, 33 wird vielmehr im Takt weitergeschaltet. Ist hingegen das Sollgewicht mit Hilfe der Restportion 62, 63 nicht erreicht, wird bei geöffneter Verschlussklappe 61 die Feindosiereinrichtung 12, 13 durch Antrieb der Stachelwalzen 55, 56, 58 betätigt, derart, dass eine zusätzliche Differenzportion über die Rutsche 59 in die betreffende Tasche 34 eingefördert wird. Nach Erreichen des Sollgewichts werden gleichzeitig die Verschlussklappe 61 in Schliessstellung bewegt und die Stachelwalzen 55, 56, 58 stillgesetzt. Es bildet sich aber noch eine gewisse Restportion 62, 63, die in der beschriebenen Weise der nächsten Grobportion 28 zugeschlagen wird.

Unterhalb der als Zellenräder ausgebildeten Waageaufnahmen 32, 33 sind bei dem vorliegenden Ausführungsbeispiel Auslauftrichter 64, 65 und 66 angeordnet. Der mittlere Auslauftrichter 65 ist im vorliegenden Fall oben mit einer nach beiden Seiten erweiterten Trichteröffnung ausgebildet. Diese ist so bemessen und angeordnet, dass die einander zugekehrten, nach unten bzw. zur Seite weisenden Taschen 35 und 36 der Waageaufnahmen 32 und 33 in den Auslauftrichter 65 entleeren. Dieser dient zur Aufnahme von Sollportionen 15. Der als Muldenförderer ausgebildete Abförderer 14 wird (taktweise) so geschaltet, dass sich nach jedem Wäge- und Dosiertakt eine Förderschale 67 unterhalb des Auslauftrichters 65 befindet. Die Waageaufnahmen 32 und 33 werden demnach in gegenläufiger Richtung gedreht, wenn eine ordnungsgemässe Sollportion 15 hergestellt ist und diese dem Abförderer 14 zugeführt werden soll. Hierfür ist ausschliesslich der (mittlere) Auslauftrichter 65 vorgesehen.

Die jeweils aussenliegenden Auslauftrichter 64 und 66 sind ausschliesslich der einen und anderen Waageaufnahme 32, 33 zugeordnet. Diese Auslauftrichter 64 und 66 sind so gestaltet, dass etwaige Fehlportionen zur Seite abgefördert werden, jedenfalls nicht in den Abförderer 14 gelangen. Die Auslauftrichter 64 und 66 sind demnach für übergewichtige und für unterhalb der zulässigen Marge unterbemessene Fehlportionen bestimmt.

Die in vorstehender Weise ausgebildete Dosiervorrichtung für insbesondere Tabakportionen zeichnet sich vor allem durch äusserste Präzision bei schonender Behandlung und hoher Leistungsfähigkeit aus. Bestimmend hierfür sind die Zellenräder als Zwischenförderer 31 einerseits und Waageaufnahmen 32, 33 andererseits, die durch die drehende Bewegung eine hohe Leistung bewirken.

## Patentansprüche

1. Vorrichtung zur Bildung von Portionen aus faserigem Gut, insbesondere Schnittabak, durch Abtrennen einer, vorzugsweise unterbemessenen, Grobportion von einem Strang des faserigen Gutes und Zugabe einer durch Wägen der Grobportion bestimmten Ausgleichsportion, wobei mehrere, insbesondere zwei, Waagen alternativ mit einzelnen Grobportionen beschickbar und die kompletten Portionen abförderbar sind, dadurch gekennzeichnet, dass die vom Tabakstrang (16) abgetrennten Grobportionen (28) je in einer Tasche (34, 35, 36) eines drehbaren Zwischenförderers (31) Aufnahme finden und durch Teildrehung desselben der einen oder anderen Präzisionswaage (43, 44) zuführbar sind.

2. Vorrichtung nach Anspruch 1, dadurch gekennzeichnet, dass der Zwischenförderer (31) als Zellenrad ausgebildet ist mit drei sich je über einen Umfangsbereich von etwa 120° erstreckenden, auf der radial aussenliegenden Seite offenen Taschen (34, 35, 36), von denen die jeweils obere bzw. nach oben offene Tasche zur Aufnahme einer Tabakportion (28) und die jeweils nach unten bzw. zur Seite gerichteten Taschen zur Entleerung dienen.

3. Vorrichtung nach Anspruch 1 oder 2, dadurch gekennzeichnet, dass der als Zellenrad ausgebildete Zwischenförderer jeweils um 120° in der einen oder anderen Richtung drehbar ist.

4. Vorrichtung nach Anspruch 2 oder 3, dadurch gekennzeichnet, dass die Taschen (34, 35, 36) des Zellenrades durch in einem Winkelabstand von 120° voneinander angeordnete, radial gerichtete Trennwände (37, 38, 39) begrenzt sind, die sich zwischen scheibenförmigen Seitenwänden (50) erstrecken.

5. Vorrichtung nach Anspruch 4, dadurch gekennzeichnet, dass an den in Radialrichtung aussenliegenden Enden der Trennwände (37, 38, 39) im Querschnitt annähernd dreieckförmige Verdikkungen angeordnet sind zur Bildung trichterartiger Leitflächen (41) der Taschen (34, 35, 36) im radial aussenliegenden Bereich.

6. Vorrichtung nach Anspruch 4 oder 5, dadurch gekennzeichnet, dass die Trennwände (37, 38, 39) im radial innenliegenden Bereich eine Abrundung (42) der Taschen (34, 35, 36) bilden.

7. Vorrichtung nach einem oder mehreren der Ansprüche 1 bis 6, dadurch gekennzeichnet, dass an den Zwischenförderer (31), vorzugsweise zwei, Waageaufnahmen (32, 33) anschliessen, die mit Kontrollwaagen (43, 44) verbunden und derart relativ zum Zwischenförderer (31) angeordnet sind, dass die Tabakportionen (28) durch diesen alternativ der einen oder anderen Waageaufnahme (32, 33) zuführbar sind, insbesondere durch seitlich und nach unten versetzte Anordnung der Waageaufnahmen (32, 33) in bezug auf den Zwischenförderer (31).

8. Vorrichtung nach Anspruch 7, dadurch gekennzeichnet, dass die Waageaufnahmen (32, 33) als Förderer für die Tabakportionen ausgebildet sind, insbesondere als Zellenrad mit je drei Taschen (34, 35, 36), wobei die drehbaren Waageaufnahmen (32, 33) während des Stillstands derart fixiert sind, dass jeweils eine Tasche (34) zur Aufnahme einer Grobportion (28) vom Zwischenförderer (31) nach oben gerichtet ist.

9. Vorrichtung nach Anspruch 8, dadurch gekennzeichnet, dass die als Zellenrad ausgebildeten Waageaufnahmen (32, 33) achsparallel zu dem ebenfalls als Zellenrad ausgebildeten Zwischenförderer (31) unterhalb und seitlich versetzt zu diesem angeordnet sind.

10. Vorrichtung nach einem oder mehreren der Ansprüche 7 bis 9, dadurch gekennzeichnet, dass die Waageaufnahmen (32, 33) (drehbar) mit je einer Präzisionswaage (43, 44) verbunden sind, nämlich über einen Tragarm (46, 47) mit einem Waagebalken (48, 49).

11. Vorrichtung nach einem oder mehreren der Ansprüche 7 bis 10, dadurch gekennzeichnet, dass, vorzugsweise zwei, Feindosiereinrichtungen (12, 13) zur Bildung von Differenzportionen derart relativ in bezug auf die Waageaufnahme (32, 33) angeordnet sind, dass die Differenzportionen in eine jeweils obere bzw. nach oben offene Tasche (34) der Waageaufnahme (32, 33) einführbar ist.

12. Vorrichtung nach Anspruch 11, dadurch gekennzeichnet, dass die Feindosiereinrichtungen (12, 13) benachbart zur zugeordneten Waageaufnahme (32, 33) und oberhalb der nach oben gerichteten Tasche (34) für die Zuführung der Differenzportion eine Rutsche (59) mit bewegbarer Verschlussklappe (61) aufweisen, wobei durch Öffnen der Verschlussklappe (61) eine Differenzportion in die nach oben gerichtete Tasche (34) einführbar ist.

13. Vorrichtung nach Anspruch 12, dadurch gekennzeichnet, dass während eines Dosiertaktes zunächst durch Öffnen der Verschlussklappe (61) eine Restportion (62) in die nach oben gerichtete Tasche (34) der Waageaufnahme (32, 33) und danach — soweit erforderlich — eine Differenzportion bis zum Erreichen der Sollportion (15) zuführbar ist.

14. Vorrichtung nach einem oder mehreren der Ansprüche 8 bis 13, dadurch gekennzeichnet, dass unterhalb der Waageaufnahmen (32, 33) Führungsorgane, insbesondere Auslauftrichter (64, 65, 66) zur Zuführung von Sollportionen (15) zu einem Abförderer (14) bzw. alternativ zur Ableitung von Fehlportionen angeordnet sind.

15. Vorrichtung nach Anspruch 14, dadurch gekennzeichnet, dass den beiden Waageaufnahmen (32, 33) ein gemeinsamer, mittlerer Auslauftrichter (65) mit nach oben erweiterter Trichteröffnung für die Zuführung von Sollportionen (15) zum Abförderer (14) und je ein gesonderter Auslauftrichter (64, 66) für Fehlportionen zugeordnet sind.

16. Vorrichtung nach Anspruch 1 sowie einem oder mehreren der weiteren Ansprüche, dadurch gekennzeichnet, dass ein aufrechter Förderschacht (10) für die Bildung und Zuführung des Tabakstrangs (16) aus zwei einander gegenüberliegenden Förderbändern (17, 18) mit nach unten konvergierendem Fördertrum (19, 20) sowie um 90° versetzt hierzu angeordneten, aufrechten Schachtwänden (21, 22) besteht, wobei die Fördertrums (19, 20) zwischen den aufrechten, parallel zueinander gerichteten Schachtwänden (21, 22) laufen.

## Revendications

1. Dispositif pour la formation de portions de matière fibreuse, en particulier de tabac coupé, par détachement d'une portion approximative, de préférence sous-dimensionnée, d'un cordon de matière fibreuse et addition d'une portion complémentaire déterminée par pesage de la portion approximative, plusieurs balances, en particulier deux, pouvant être chargées alternativement avec des portions approximatives individuelles, et les portions complètes pouvant être évacuées, caractérisé par le fait que les portions approximatives (28) détachées du cordon de tabac (16) sont reçues chacune dans une poche (34, 35, 36) d'un transporteur intermédiaire tournant (31) et peuvent être conduites par rotation partielle de celui-ci à l'une ou l'autre balance de précision (43, 44).

2. Dispositif selon la revendication 1, caractérisé par le fait que le transporteur intermédiaire (31) est une roue cellulaire comportant trois poches (34, 35, 36) s'étendant chacune sur un domaine circonférentiel d'environ 120° et ouvertes sur le côté extérieur radialement, la poche supérieure ou ouverte vers le haut étant destinée à recevoir une portion de tabac (28) et les poches dirigées vers le bas ou vers le côté servant au vidage.

3. Dispositif selon l'une des revendications 1 et 2, caractérisé par le fait que le transporteur intermédiaire, constitué d'une roue cellulaire, peut être tourné par pas de 120° dans l'un ou l'autre sens.

4. Dispositif selon l'une des revendications 2 et 3, caractérisé par le fait que les poches (34, 35, 36) de la roue cellulaire sont limitées par des cloisons (37, 38, 39) dirigées radialement et placées à une distance angulaire de 120° les unes des autres, qui s'étendent entre des parois latérales en forme de disque (50).

5. Dispositif selon la revendication 4, caractérisé par le fait qu'aux extrémités extérieures, en direction radiale des cloisons (37, 38, 39), se trouvent des épaississements de section approximativement triangulaire destinés à former dans la zone extérieure radialement des surfaces directrices du genre entonnoir (41) des poches (34, 35, 36).

6. Dispositif selon l'une des revendications 4 et 5, caractérisé par le fait que les cloisons (37, 38, 39) forment dans la zone intérieure radialement un arrondi (42) des poches (34, 35, 36).

7. Dispositif selon une ou plusieurs des revendications 1 à 6, caractérisé par le fait que le transporteur intermédiaire (31) est suivi de récepteurs de pesée (32, 33), de préférence au nombre de deux, qui sont reliés à des balances de contrôle (43, 44) et placés par rapport au transporteur intermédiaire (31) de façon telle que les portions de tabac (28) puissent être amenées par celui-ci alternativement à l'un et à l'autre récepteur de pesée (32, 33), en particulier par décalage latéral et vers le bas des récepteurs de pesée (32, 33) par rapport au transporteur intermédiaire (31).

8. Dispositif selon la revendication 7, caractérisé par le fait que les récepteurs de pesée (32, 33) sont des transporteurs de portions de tabac, en particulier des roues cellulaires à trois poches (34, 35, 36), et sont, pendant l'arrêt, fixés de façon telle qu'une de leurs poches (34) soit dirigée vers le haut pour recevoir une portion approximative (28) du transporteur intermédiaire (31).

9. Dispositif selon la revendication 8, caractérisé par le fait que les récepteurs de pesée (32, 33), constitués d'une roue cellulaire, sont placés, leur axe parallèle à celui du transporteur intermédiaire (31), également constitué d'une roue cellulaire, au-dessous et décalés latéralement de celui-ci.

10. Dispositif selon une ou plusieurs des revendications 7 à 9, caractérisé par le fait que les récepteurs de pesée (32, 33) sont reliés chacun de manière articulée à une balance de précision (43, 44), plus précisément à un fléau de balance (48, 49) par l'intermédiaire d'un bras support (46, 47).

11. Dispositif selon une ou plusieurs des revendications 7 à 10, caractérisé par le fait que de préférence deux dispositifs de dosage de précision (12, 13) destinés à former des portions complémentaires sont placés relativement aux récepteurs de pesée (32, 33) de façon telle que les portions complémentaires puissent être introduites dans une poche supérieure ou ouverte vers le haut (34) du récepteur de pesée (32, 33).

12. Dispositif selon la revendication 11, caractérisé par le fait que les dispositifs de dosage de précision (12, 13) présentent à proximité du récepteur de pesée associé (32, 33) et au-dessus de la poche dirigée vers le haut (34), pour l'amenée de la portion complémentaire, une goulotte (59) à volet mobile de fermeture (61), une portion complémentaire pouvant, par ouverture de ce volet (61), être introduite dans la poche dirigée vers le haut (34).

13. Dispositif selon la revendication 12, caractérisé par le fait que, pendant une opération de dosage, dans la poche dirigée vers le haut (34) du récepteur de pesée (32, 33) peuvent être amenées, par ouverture du volet (61), d'abord une portion résiduelle (62) et ensuite, s'il y a lieu, une portion complémentaire jusqu'à ce que la portion voulue (15) soit obtenue.

14. Dispositif selon une ou plusieurs des revendications 8 à 13, caractérisé par le fait qu'audessous des récepteurs de pesée (32, 33) sont placés des organes de guidage, en particulier des trémies de sortie (64, 65, 66) pour la conduite des portions exactes (15) à un transporteur d'évacuation (14) et l'évacuation des portions inexactes.

15. Dispositif selon la revendication 14, caractérisé par le fait qu'aux deux récepteurs de pesée (32, 33) est adjointe une trémie de sortie médiane commune (65) à ouverture élargie vers le haut pour la conduite des portions exactes (15) au transporteur d'évacuation (14), et à chacun d'eux est adjointe une trémie de sortie séparée (64, 66) pour les portions inexactes.

16. Dispositif selon selon la revendication 1 et une ou plusieurs des revendications suivantes, caractérisé par le fait qu'une cheminée verticale de transport (10), pour la formation et l'amenée du cordon de tabac (16), est constituée de deux bandes transporteuses (17, 18) se faisant face, dont les brins transporteurs (19, 20) convergent vers le bas, et de deux parois verticales (21, 22) perpendiculaires à ces bandes, les brins transporteurs (19, 20) évoluant entre ces parois verticales parallèles (21, 22).

## Claims

1. Apparatus for forming portions of fibrous material, in particular cut tobacco, by separating a preferably undersized approximate portion from a stream of the fibrous material and adding a compensating portion determined by weighing the approximate portion, in which case several, in particular two balances can be supplied alternately with individual approximate portions and the complete portions can be discharged, characterised in that the approximate portions (28) separated from the tobacco stream (16) are each received in a compartment (34, 35, 36) of a rotary intermediate conveyor (31) and by partial rotation of the latter can be supplied to one or other precision balance (43, 44).

2. Apparatus according to Claim 1, characterised in that the intermediate conveyor (31) is constructed as a cell-wheel with three compartments (34, 35, 36) each extending over a peripheral region of approximately 120° and open on the radially outer side, whereof the respectively upper compartment or the compartment which is open at the top serves to receive a tobacco portion (28) and the compartments directed downwards or to the side serve for emptying.

3. Apparatus according to Claim 1 or 2, characterised in that the intermediate conveyor constructed as a cell-wheel is able to rotate in each case by 120° in one or other direction.

4. Apparatus according to Claim 2 or 3, characterised in that the compartments (34, 35, 36) of the cell-wheel are defined by dividing walls (37, 38, 39) arranged with an angular spacing of 120° with respect to each other and directed radially, which dividing walls extend between disc-like side walls (50).

5. Apparatus according to Claim 4, characterised in that provided at the ends of the dividing walls (37, 38, 39) which lie on the outside in the radial direction are thicker portions of approximately triangular cross section in order to form funnel-like guide surfaces (41) of the compartments (34, 35, 36) in the radially outermost region.

6. Apparatus according to Claim 4 or 5, characterised in that in the radially inner region, the dividing walls (37, 38, 39) form a rounded portion (42) of the compartment (34, 35, 36).

7. Apparatus according to one or more of Claims 1 to 6, characterised in that adjoining the intermediate conveyor (31) are preferably two balance receptacles (32, 33), which are connected to monitoring balances (43, 44) and are arranged relative to the intermediate conveyor (31) so that the tobacco portions (28) are able to be supplied by the latter alternately to one or other balance receptacle (32, 33), in particular due to the fact that the balance receptacles (32, 33) are arranged at the side of and below the intermediate conveyor (31).

8. Apparatus according to Claim 7, characterised in that the balance receptacles (32, 33) are constructed as conveyors for the tobacco portions, in particular as a cell-wheel each with three compartments (34, 35, 36), in which case the rotary balance receptacles (32, 33) are fixed during the stoppage so that one compartment (34) respectively is directed upwards for receiving an approximate portion (28) from the intermediate conveyor (31).

9. Apparatus according to Claim 8, characterised in that the balance receptacles (32, 33) constructed as a cell-wheel are arranged axis parallel to the intermediate conveyor (31) likewise constructed as a cell-wheel, below and offset laterally with respect to the latter.

10. Apparatus according to one or more of Claims 7 to 9, characterised in that the balance receptacles (32, 33) are connected (in a rotary manner) respectively to a precision balance (43, 44), namely by way of a support arm (46, 47) with a balance beam (48, 49).

11. Apparatus according to one or more of Claims 7 to 10, characterised in that preferably two fine-dosing devices (12, 13) for forming differential portions are arranged with respect to the balance receptacle (32, 33) so that the differential portions can be introduced into an upper compartment (34) or a compartment (34) which is open at the top of the balance receptacle (32, 33).

12. Apparatus according to Claim 11, characterised in that adjacent to the associated balance receptacle (32, 33) and above the upwardly directed compartment (34) for the supply of differential portions, the fine-dosing devices (12, 13) comprise a slide (59) with a movable closing flap (61), in which case by opening the closing flap (61) a differential portion can be introduced into the upwardly directed compartment (34).

13. Apparatus according to Claim 12, characterised in that during a dosing cycle, first of all by opening the closing flap (61), a residual portion (62) can be supplied into the upwardly directed compartment (34) of the balance receptacle (32, 33) and then — if necessary — a differential portion can be supplied until the desired portion (15) is achieved.

14. Apparatus according to one or more of Claims 8 to 13, characterised in that provided below the balance receptacles (32, 33) are guide members, in particular outlet funnels (64, 65, 66) for supplying desired portions (15) to a discharge conveyor (14) or alternatively for diverting incorrect portions.

15. Apparatus according to Claim 14, characterised in that associated with the two balance receptacles (32, 33) is a common, central outlet funnel (65) with an upwardly enlarged funnel opening for the supply of desired portions (15) to the discharge conveyor (14) and a separate outlet funnel (64, 66) respectively for incorrect portions.

16. Apparatus according to Claim 1 and one or more of the other claims, characterised in that an upright conveyor chute (10) for forming and supplying the tobacco stream (16) consists of two opposing conveyor belts (17, 18) with a downwardly converging side (19, 20) as well as upright chute walls (21, 22) arranged to be staggered by an angle of 90° with respect thereto, in which case the sides (19, 20) travel between the upright chute walls (21, 22) arranged parallel to each other.

Fig.1

0 099 980

Fig. 2

# Fig. 3

# Fig. 4